# FASCICULE DE BREVET EUROPEEN

(11) **EP 3 303 811 B1**
(45) Date de publication et mention de la délivrance du brevet: **24.10.2018**
(21) Numéro de dépôt: 16731240.4
(22) Date de dépôt: 02.06.2016
(51) Int. Cl.: F02K 1/12, B64D 33/04, F02K 1/76

(54) **INVERSEUR DE POUSSÉE POUR NACELLE DE TURBORÉACTEUR D'AÉRONEF**
SCHUBUMKEHRVORRICHTUNG FÜR FLUGZEUGTRIEBWERKSGONDEL
THRUST REVERSER FOR AIRCRAFT TURBINE ENGINE NACELLE

(30) Priorité: 02.06.2015 FR 1555008
(43) Date de publication de la demande: 11.04.2018
(73) Titulaire: Safran Nacelles, 76700 Gonfreville-l'Orcher (FR)
(72) Inventeur: MORADELL-CASELLAS, Pierre, 61100 Saint Georges des Groseillers (FR)
(74) Mandataire: Gaillarde, Frédéric F. Ch.
(86) Numéro de dépôt international: PCT/FR2016/051313
(87) Numéro de publication internationale: WO 2016/193623

(56) Documents cités:
- FR-A1- 2 991 670
- US-A1- 2003 218 094

## Description

L'invention concerne un inverseur de poussée pour nacelle de turboréacteur d'aéronef.

Plus particulièrement, l'invention concerne l'accouplement d'un inverseur de poussée pour nacelle de turboréacteur d'aéronef sur une tuyère à section variable associée.

Un aéronef est mû par plusieurs turboréacteurs logés chacun dans une nacelle abritant un ensemble de dispositifs d'actionnement annexes liés à son fonctionnement et assurant diverses fonctions lorsque le turboréacteur est en fonctionnement ou à l'arrêt.

Ces dispositif d'actionnement annexes comprennent notamment un système mécanique d'inversion de poussée.

Une nacelle de turboréacteur présente généralement une structure sensiblement tubulaire comprenant une entrée d'air en amont du turboréacteur, une section médiane destinée à entourer une soufflante dudit turboréacteur, une section aval destinée à entourer la chambre de combustion du turboréacteur et intégrant éventuellement des moyens d'inversion de poussée, et est généralement terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux de gaz chauds (flux primaire) et un flux d'air froid (flux secondaire) qui circule à l'extérieur du turboréacteur à travers un passage annulaire, également appelé veine, formé entre un carénage du turboréacteur et une paroi interne de la nacelle. Les deux flux sont éjectés du turboréacteur par l'arrière de la nacelle.

Le rôle d'un inverseur de poussée est, lors de l'atterrissage d'un aéronef, d'améliorer la capacité de freinage de celui-ci en redirigeant vers l'avant au moins une partie de l'air éjecté du turboréacteur. Dans cette phase, l'inverseur obstrue au moins une partie de la veine du flux froid et dirige ce flux vers l'avant de la nacelle, générant de ce fait une contre-poussée qui vient s'ajouter au freinage des roues et aérofreins de l'avion.

De manière générale, la structure d'un inverseur comprend un capot d'inverseur déplaçable entre, d'une part, une position de jet inversé dans laquelle il ouvre dans la nacelle un passage destiné au flux d'air dévié, et d'autre part, une position de jet direct dans laquelle il ferme ce passage.

Outre participer à une fonction d'inversion de poussée, un capot mobile d'inverseur par son appartenance à la section arrière de la nacelle inclut de facto une partie aval formant tuyère d'éjection.

La section de la tuyère d'éjection peut être adaptée en fonction des différentes phases de vols, à savoir notamment décollage, montée, croisière, descente et atterrissage afin de toujours conserver une section optimale de tuyère en fonction du régime du turboréacteur. La tuyère sera alors appelée tuyère variable.

Une telle tuyère variable est associée à un système d'actionnement permettant cette variation de section.

Il existe plusieurs solutions pour réaliser une tuyère variable.

Une première solution est de prévoir des volets terminaux pivotants montés sur le capot mobile d'inverseur et dont le pivotement se traduit par une augmentation ou par une réduction de la section de sortie. Un tel système est décrit dans les documents FR 2 929 998 et FR 2 934 326 notamment.

On connait par ailleurs, du document FR 2 991 670, un dispositif conforme au préambule de la revendication 1.

On connaît également des panneaux montés mobile en translation à l'intérieur du capot mobile d'inverseur, de manière télescopique, dont le recul ou la rétractation entraîne de façon similaire l'augmentation ou la réduction de la section de sortie.

Dans la cadre d'un inverseur muni d'une tuyère à section variable, il est connu d'actionner le déploiement du capot mobile et le mécanisme de variation de la section de la tuyère variable par les mêmes vérins, le capot mobile et la tuyère variable étant accouplés et désacouplés sélectivement par un dispositif de verrouillage.

Ce dispositif de verrouillage relie sélectivement le capot d'inverseur et la tuyère variable de manière rigide, la tuyère variable étant libre lorsque le capot d'inverseur est verrouillé sur la structure fixe de l'inverseur dans sa position de jet direct, et la tuyère variable étant accouplée sur le capot lorsque le capot est déverrouillé, de sorte que la tuyère et le capot sont entraînés en déplacement simultanément.

Ce type de dispositif de verrouillage est généralement relativement complexe, il nécessite souvent un alignement de différentes pièces pour permettre l'accouplement du capot et de la tuyère variable.

Le nombre élevé de pièces de ce type de dispositif d'accouplement est source de panne et conduit souvent à une fiabilité moyenne.

La présente invention vise notamment à résoudre cet inconvénient et se rapporte pour ce faire à un inverseur de poussée pour nacelle de turboréacteur d'aéronef comprenant au moins :
- un capot d'inversion de poussée mobile en translation suivant une direction sensiblement parallèle à un axe longitudinal de la nacelle, entre une position de jet direct et une position de jet inversé,
- une tuyère de sortie de section variable qui est agencée dans le prolongement aval dudit capot et qui est mobile entre au moins une position de section d'éjection réduite et une position de section d'éjection augmentée,
- un actionneur qui comprend un corps monté sur la structure fixe de l'inverseur et une tige d'actionnement, ladite tige étant adaptée pour entraîner en déplacement la tuyère variable et le capot mobile,
- un premier dispositif de verrouillage du capot dans sa position de jet direct sur la structure fixe de l'inverseur, qui comprend un crochet de verrouillage monté pivotant autour d'un axe transversal, entre une position fermée de verrouillage du capot dans laquelle le crochet coopère avec un doigt de verrouillage solidaire du capot d'inversion, et une position ouverte de déverrouillage du capot dans laquelle le crochet libère ledit doigt,
- un second dispositif de verrouillage de la tuyère sur le capot d'inversion, adapté pour occuper alternativement une position de verrouillage de la tuyère sur le capot et une position de déverrouillage de la tuyère,
- caractérisé en ce qu'il comporte un levier de réarmement qui est conçu pour être entraîné en pivotement par le doigt, autour d'un axe transversal, depuis une position de repos, jusqu'à une position de réarmement, le levier étant lié en pivotement sur le crochet au moins dans le sens de fermeture du crochet, de sorte que l'entraînement en pivotement du levier par le doigt vers sa position de repos entraîne le crochet vers sa position de verrouillage,
- un bras d'actionnement monté mobile sur le capot entre une position de verrouillage de la tuyère dans laquelle ledit bras actionne le second dispositif de verrouillage pour verrouiller la tuyère sur le capot d'inversion, et une position de déverrouillage de la tuyère dans laquelle ledit bras déverrouille la tuyère, ledit bras étant entraîné dans sa position de verrouillage par le crochet de verrouillage, au cours du pivotement du crochet vers sa position de déverrouillage.

Un tel inverseur présente l'avantage d'être fiable, le levier de réarmement entraînant mécaniquement et automatiquement le crochet vers sa position de verrouillage, sous l'effet de la poussée du poussoir.

De plus, l'ouverture du crochet vers sa position de déverrouillage du capot provoque automatiquement le verrouillage de la tuyère sur le capot par l'actionnement du second dispositif de verrouillage, via le bras d'actionnement.

Inversement, la fermeture du crochet vers sa position de verrouillage provoque automatiquement le déverrouillage de la tuyère par la libération du second dispositif de verrouillage, via le bras d'actionnement.

Ainsi, l'inverseur selon l'invention permet d'utiliser la force de l'actionneur du capot pour déverrouiller le dispositif de verrouillage de la tuyère sur le capot par l'intermédiaire du crochet.

Selon une autre caractéristique, l'inverseur de poussée comprend un dispositif de rappel élastique du bras vers sa position de déverrouillage.

Selon une autre caractéristique, l'inverseur comprend un dispositif de rappel élastique du levier vers sa position de réarmement.

Selon une autre caractéristique, le crochet du premier dispositif de verrouillage du capot est monté sur la structure fixe de l'inverseur.

Selon une autre caractéristique, l'inverseur comprend :
- un dispositif de rappel élastique du crochet vers sa position de déverrouillage, et
- un loquet qui est conçu pour être commandé depuis un état de blocage du crochet, dans lequel le loquet s'oppose à l'ouverture du crochet, vers un état de déblocage du crochet dans lequel le loquet libère le crochet, le loquet étant rappelé automatiquement dans son état de blocage du crochet sous l'effet d'un dispositif de rappel élastique.

Ainsi, la commande du loquet permet le déverrouillage du crochet sans actionneur supplémentaire.

Selon un premier mode de réalisation de l'invention, le levier de réarmement est escamotable, le levier de réarmement et le crochet de verrouillage étant reliés entre eux par un mécanisme du type à cliquet qui est adapté pour accoupler en pivotement le crochet et le levier au cours du réarmement du crochet vers sa position fermée de verrouillage, sous l'action du doigt, et ledit mécanisme étant adapté pour désaccoupler en pivotement le crochet et le levier au cours du pivotement du crochet vers sa position de déverrouillage.

Selon un second mode de réalisation de l'invention, le levier de réarmement est solidaire en pivotement du crochet, l'ensemble formé par le levier et le crochet étant rappelé élastiquement par un dispositif de rappel élastique vers la position déverrouillée du crochet.

Toujours selon ce second mode, le loquet de blocage du crochet présente un chemin de came qui est solidaire en mouvement du loquet et qui coopère avec une came fixée sur le crochet, le chemin de came présentant une première portion de blocage du crochet dans sa position de verrouillage, une deuxième portion de retenue du crochet dans sa position de déverrouillage, et une troisième portion de guidage intermédiaire du crochet conçue pour permettre le pivotement du crochet lorsque le loquet est commandé dans son état de déblocage.

Dans une réalisation la came fixée sur le crochet est adaptée pour coopérer avec le chemin de came pour entraîner le loquet depuis son état de déblocage du crochet, vers son état de blocage du crochet, au cours de la fermeture du crochet depuis sa position de déverrouillage vers sa position de verrouillage.

L'invention concerne par ailleurs une nacelle de turboréacteur d'aéronef comportant un inverseur de poussée tel que défini ci-dessus.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'une nacelle d'aéronef équipée d'un inverseur de poussée selon l'invention ;
- la figure 2 est une vue schématique en section longitudinale qui illustre l'inverseur de la figure 1 dans une position de jet direct ;
- la figure 3 est une vue schématique en section longitudinale qui illustre l'inverseur de la figure 1 dans une position de jet indirect ;
- les figures 4 à 8 sont des schémas qui illustrent la cinématique du dispositif de verrouillage du capot de l'inverseur, comprenant un crochet de verrouillage monté pivotant entre une position de verrouillage du capot et une position de déverrouillage du capot, selon un premier mode de réalisation de l'invention ;
- les figures 9 à 11 sont des schémas qui illustrent la cinématique du dispositif de verrouillage du capot de l'inverseur, selon un second mode de réalisation de l'invention.

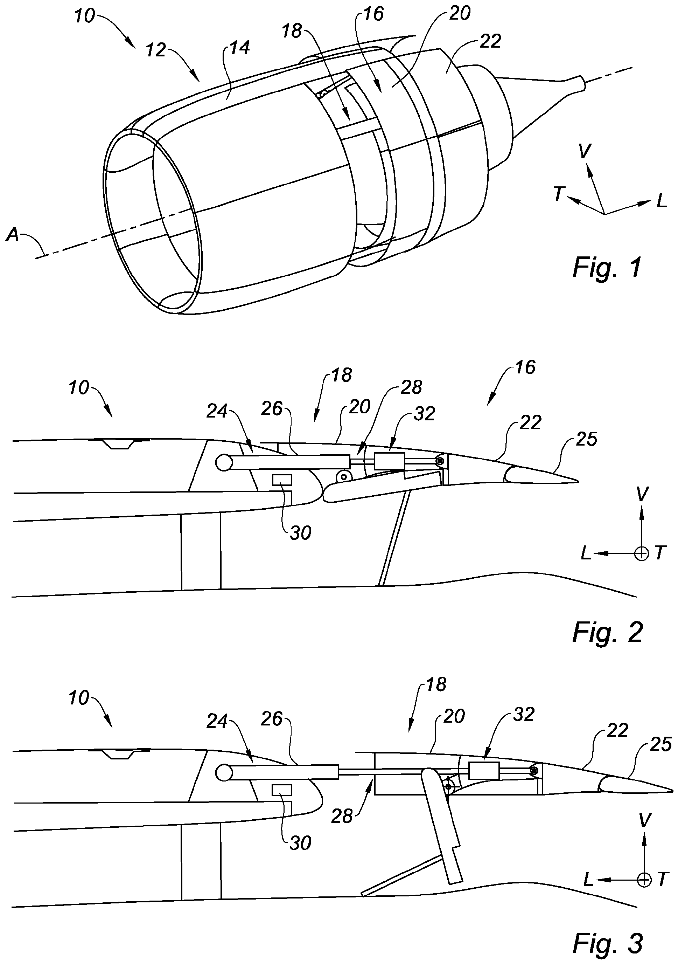

Dans la description et les revendications, on utilisera à titre non limitatif les expressions « supérieur », « inférieur » et leurs dérivés en référence à la partie supérieure et à la partie inférieure respectivement des figures 1 à 11.

De plus, pour clarifier la description et les revendications, on adoptera à titre non limitatif la terminologie longitudinal, vertical et transversal en référence au trièdre L, V, T indiqué aux figures, dont l'axe L est parallèle à l'axe de la nacelle.

Pour les différentes variantes de réalisation, les mêmes références pourront être utilisées pour des éléments identiques ou assurant la même fonction, par souci de simplification de la description.

On a représenté à la figure 1 une nacelle 10 de turboréacteur pour aéronef, qui s'étend axialement suivant un axe A longitudinal.

La nacelle 10 comporte une partie avant 12 fixe qui comporte une poutraison 14 centrale de fixation sur l'aéronef, et une partie arrière 16 mobile.

La partie arrière 16 mobile comporte un inverseur 18 de poussée qui comprend un capot 20 d'inversion de poussée et une tuyère 22 d'éjection de section variable agencée dans le prolongement aval du capot 20.

Le capot 20 d'inversion de poussée est monté mobile en translation suivant une direction sensiblement parallèle à l'axe A longitudinal de la nacelle 10, entre une position de jet direct représentée à la figure 2, dans laquelle le capot 20 ouvre dans la nacelle 10 un passage destiné au flux d'air dévié, et une position de jet inversé représentée aux figures 1 et 3 dans laquelle le capot 20 ferme ce passage.

L'inverseur 18 de poussée est équipé de moyens de déviation (non représentés) du flux d'air qui sont par exemple du type à grille fixe ou du type à grille mobile.

Le capot 20 est entraîné en déplacement au moyen d'une pluralité de vérins 24, dont un seul est décrit par la suite et représenté sur les figures.

La tuyère 22 de sortie de section variable est montée mobile sur la structure fixe de l'inverseur 18 entre au moins une position de section d'éjection réduite, et une position de section d'éjection augmentée.

La tuyère 22 comprend une pluralité de volets 25 qui sont montés pivotants sur la structure fixe de l'inverseur 18 de poussée pour faire varier la section d'éjection de la tuyère 22, chacune des positions de la tuyère 22 correspond ici à une inclinaison distincte des volets 25.

A cet effet, le vérin 24 comporte un corps 26 monté sur la structure fixe de l'inverseur 18 et une tige 28 d'actionnement qui est adaptée pour entraîner en déplacement sélectivement la tuyère 22 variable ou l'ensemble constitué par la tuyère 22 variable et le capot 20 mobile.

De plus, l'inverseur 18 comporte un premier dispositif de verrouillage 30 du capot 20 dans sa position de jet direct sur la structure fixe de l'inverseur 18, et un second dispositif de verrouillage 32 de la tuyère 22 sur le capot 20 d'inversion.

Le premier dispositif de verrouillage 30 comprend un doigt 34 de verrouillage transversal qui est fixé sur le capot 20 et un crochet 36 de verrouillage.

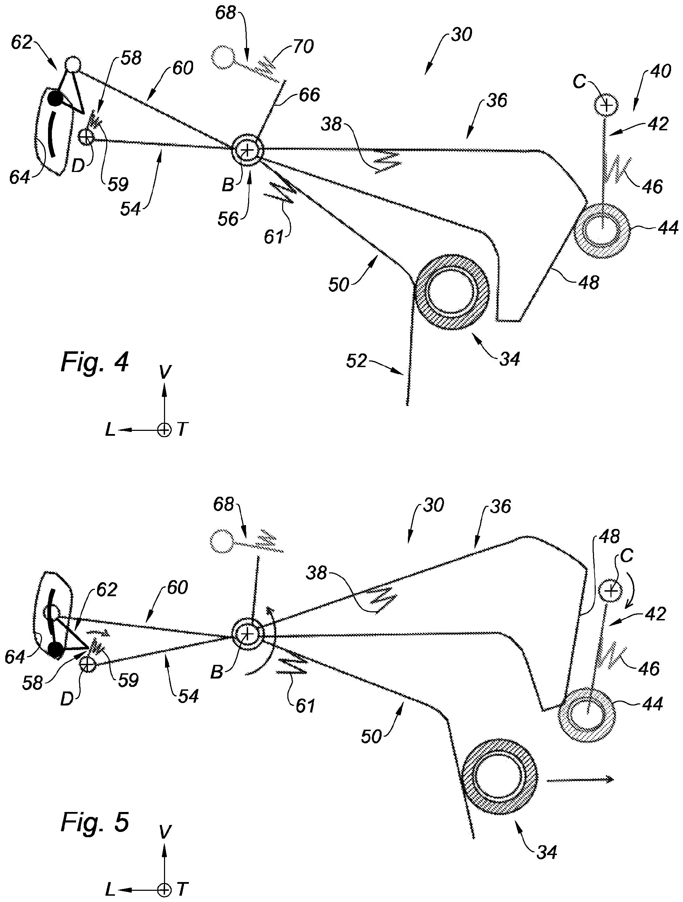

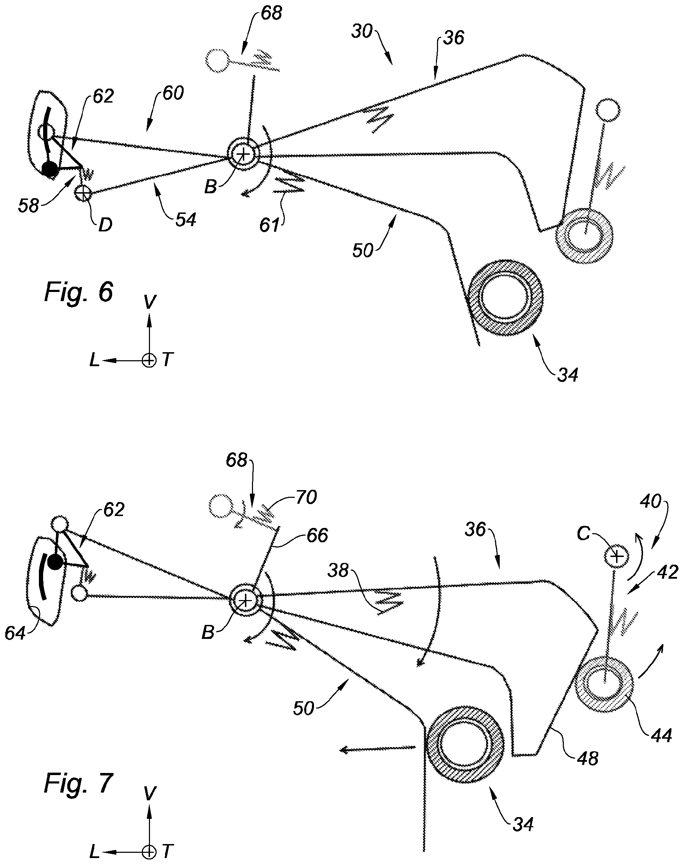

Le crochet 36 de verrouillage est monté pivotant sur la structure fixe de l'inverseur 18, autour d'un axe B transversal, entre une position fermée de verrouillage illustrée à la figure 4, dans laquelle le crochet 36 coopère avec le doigt 34 de verrouillage pour bloquer le capot 20 sur la structure fixe de l'inverseur 18 dans sa position de jet direct, et une position ouverte de déverrouillage, illustrée à la figure 6, dans laquelle le crochet 36 libère le doigt 34 de verrouillage pour permettre l'entraînement en coulissement du capot 20 par l'actionneur 24 vers sa position de jet inversé.

Le crochet 36 est associé à un ressort 38 formant dispositif de rappel élastique, qui rappelle élastiquement le crochet 36 vers sa position ouverte de déverrouillage.

Le second dispositif de verrouillage 32 de la tuyère 22 sur le capot 20 d'inversion est adapté pour occuper alternativement une position de verrouillage de la tuyère 22 sur le capot 20 dans laquelle la tuyère est solidaire du capot 20, et une position de déverrouillage de la tuyère 22 dans laquelle la tuyère 22 est apte à être entraînée entre sa position de section d'éjection réduite et sa position de section d'éjection augmentée.

Le second dispositif de verrouillage 32, qui n'est pas décrit plus en détail, peut être constitué par tout type de moyen de verrouillage connu, notamment un verrou à crochet, par exemple.

Le premier dispositif de verrouillage 30 du capot 20 coopère avec le second dispositif de verrouillage 32 de la tuyère 22 par l'intermédiaire d'un mécanisme 40 d'actionnement du second dispositif de verrouillage 32.

Le mécanisme 40 d'actionnement comporte un bras 42 d'actionnement qui présente une première extrémité montée pivotante autour d'un axe C transversal sur la structure fixe de l'inverseur 18, et une seconde extrémité équipée d'un galet 44.

Le bras 42 d'actionnement est pivotant entre une position de déverrouillage, illustrée à la figure 4, dans laquelle le second dispositif de verrouillage 32 déverrouille la tuyère 22, et une position de verrouillage, illustrée à la figure 5, dans laquelle le bras 42 actionne le second dispositif de verrouillage 32 pour verrouiller la tuyère 22 sur le capot 20 d'inversion.

Le bras 42 coopère avec un ressort 46 formant dispositif de rappel élastique, qui est interposé entre le bras 42 et une partie fixe de l'inverseur 18, et qui rappelle le bras 42 vers sa position de verrouillage.

Dans ce but, le bras 42 est relié sur le second dispositif de verrouillage 32, par un système de tringles par exemple, ou directement par un agencement approprié du premier dispositif de verrouillage 30 du capot 20 par rapport au second dispositif de verrouillage 32 de la tuyère 22.

De façon complémentaire, le crochet 36 délimite une rampe 48 d'appui qui coopère avec le galet 44 du bras 42 d'actionnement, la rampe 48 et le galet 44 étant agencés pour entraîner le bras 42 vers sa position de verrouillage au cours de l'ouverture du crochet 36 vers sa position de déverrouillage.

Autrement dit, l'ouverture du crochet 36 vers sa position de déverrouillage du capot 20 provoque automatiquement le verrouillage de la tuyère 22 sur le capot 20 par l'actionnement du second dispositif de verrouillage 32, via le bras 42 d'actionnement.

A l'inverse, la fermeture du crochet 36 vers sa position de verrouillage provoque automatiquement le déverrouillage de la tuyère 22 par la libération du second dispositif de verrouillage 32, via le bras 42 d'actionnement.

Selon un autre aspect, l'inverseur 18 comporte un poussoir 34 et un levier 50 de réarmement du crochet 36.

Le poussoir 34 est ici constitué par le doigt 34 de verrouillage, le poussoir 34 est donc appelé doigt 34 par la suite. Le doigt 34 présente la forme d'un rouleau transversal qui est solidaire en mouvement du capot 20 d'inversion et qui est agencé en vis-à-vis du levier 50.

Selon un premier mode de réalisation de l'invention, représenté aux figures 4 à 8, le levier 50 de réarmement est escamotable, le levier 50 de réarmement et le crochet 36 de verrouillage étant reliés entre eux par un mécanisme qui est adapté pour accoupler en pivotement le crochet 36 et le levier 50 au cours du réarmement du crochet 36 vers sa position fermée de verrouillage, sous l'action du doigt 34, et le mécanisme étant adapté pour désaccoupler en pivotement le crochet 36 et le levier 50 au cours du pivotement du crochet 36 vers sa position de déverrouillage.

Plus particulièrement, le levier 50 de réarmement présente un tronçon d'appui 52 adapté pour coopérer avec le doigt 34 formant poussoir, un tronçon de verrouillage 54, et un tronçon intermédiaire 56 de pivotement qui est monté pivotant autour de l'axe B transversal de pivotement du crochet 36.

Le tronçon de verrouillage 54 du levier 50 comporte un cliquet 58 qui est monté pivotant autour d'un axe D transversal et qui est associé à un ressort de rappel 59.

Aussi, le levier 50 est monté pivotant autour de l'axe B de pivotement du crochet 36, entre une position initiale illustrée à la figure 4, et une position de réarmement illustrée à la figure 6, dans laquelle le levier est apte à entraîner le crochet 36 vers sa position de déverrouillage.

Le levier 50 est rappelé élastiquement vers sa position de réarmement par un ressort 61.

Complémentairement, le crochet 36 est solidaire en pivotement d'un bras 60 qui est monté pivotant autour de l'axe B de pivotement du crochet 36, entre une position haute illustrée à la figure 4, correspondant à la position de verrouillage du crochet 36, et une position basse illustrée à la figure 6, correspondant à la position de déverrouillage du crochet 36.

Le bras 60 porte à son extrémité libre une came 62 qui est montée libre en pivotement sur le bras 60 et qui est guidée par un chemin de came 64, solidaire de la structure fixe de l'inverseur 18, au cours du pivotement du bras 60, depuis une position de repos, jusqu'à une position de réarmement illustrée à la figure 5, dans laquelle la came 62 est apte à s'opposer au cliquet 58 pour lier en mouvement le levier 50 sur le crochet 36.

De plus, le crochet 36 comporte un doigt 66 de verrouillage qui s'étend depuis le crochet 36 au voisinage de son axe B de pivotement, et qui coopère avec un loquet 68 commandé.

Le loquet 68 est monté pivotant sur la structure fixe de l'inverseur 18, entre un état de blocage représenté à la figure 4, dans lequel le loquet 68 s'oppose au doigt 66 pour bloquer le crochet 36 en pivotement, et une position escamotée représentée à la figure 5, dans laquelle le loquet 68 libère le crochet 36.

Avantageusement, le loquet 68 est rappelé élastiquement vers son étant de blocage du crochet 36 par un ressort 70 formant dispositif de rappel élastique.

Aussi, le passage du loquet 68 en position de déverrouillage se fait par l'intermédiaire d'un actionneur (non représenté).

En référence aux figures 4 à 8, le fonctionnement de l'invention selon le premier mode de réalisation est décrit ci-dessous de façon chronologique.

La figure 4 illustre le crochet 36 dans sa position de verrouillage du capot 20.

Pour déverrouiller le crochet 36, le loquet 68 est commandé dans son état de blocage pour libérer le crochet 36.

Dans un premier temps, le crochet 36 est entraîné automatiquement depuis sa position de verrouillage du capot 20, jusqu'à sa position de déverrouillage, sous l'action du ressort 38 de rappel.

Au cours de l'ouverture du crochet 36, en référence à la figure 5, la rampe 48 du crochet 36 libère le galet 44 du bras 42 du mécanisme d'actionnement 40, le bras 42 étant alors entraîné vers sa position de verrouillage par rappel élastique du ressort 46 associé, position dans laquelle le bras 42 actionne le second dispositif de verrouillage 32 pour verrouiller la tuyère 22 sur le capot 20 d'inversion.

Simultanément, toujours au cours de l'ouverture du crochet 36, le bras 60, solidaire du crochet 36, entraîne la came 62 jusqu'à sa position basse de réarmement illustrée à la figure 5.

Dans un second temps, à la suite de l'ouverture du crochet 36 et du début du déploiement du capot 20 entrainé par l'actionneur 24,, le doigt 34 de verrouillage, ou poussoir, est entraîné en déplacement longitudinal par le capot 20, vers l'arrière de la nacelle 10, comme on peut le voir à la figure 5.

Le retrait du doigt 34 libère le levier 50 qui est rappelé élastiquement par le ressort 61 associé, vers sa position de réarmement, atteinte à la figure 6.

Le pivotement du levier 50 entraîne le cliquet 58 en déplacement, déplacement au cours duquel le cliquet 58 s'efface au contact de la came 62 prévue à cet effet, à l'encontre du ressort 59 associé, avant de s'enclencher par rappel élastique sous la came 62, pour lier en mouvement le levier 50 sur le crochet 36, comme on peut le voir à la figure 6.

Dans un troisième temps, au cours de la fermeture du capot 20, le capot 20 est entraîné en avant vers sa position de jet direct, le doigt 34, ou poussoir, lié au capot 20 pousse longitudinalement le levier 50, le levier 50 pivote à l'encontre du ressort 61 associé, vers sa position initiale.

Au cours de son pivotement, le levier 50 entraîne le crochet 36 en pivotement vers sa position de verrouillage, par l'intermédiaire du cliquet 58 et de la came 62.

Au cours de la fermeture du crochet 36, la rampe 48 du crochet 36 pousse le galet 44 à l'encontre du ressort 46 associé, le bras 42 étant alors entraîné vers sa position de déverrouillage dans laquelle le second dispositif de verrouillage 32 déverrouille la tuyère 22.

Aussi, le pivotement du crochet 36 entraîne le doigt 66 de verrouillage au-delà d'une position permettant au loquet de passer dans son état de blocage par l'intermédiaire du ressort 70.

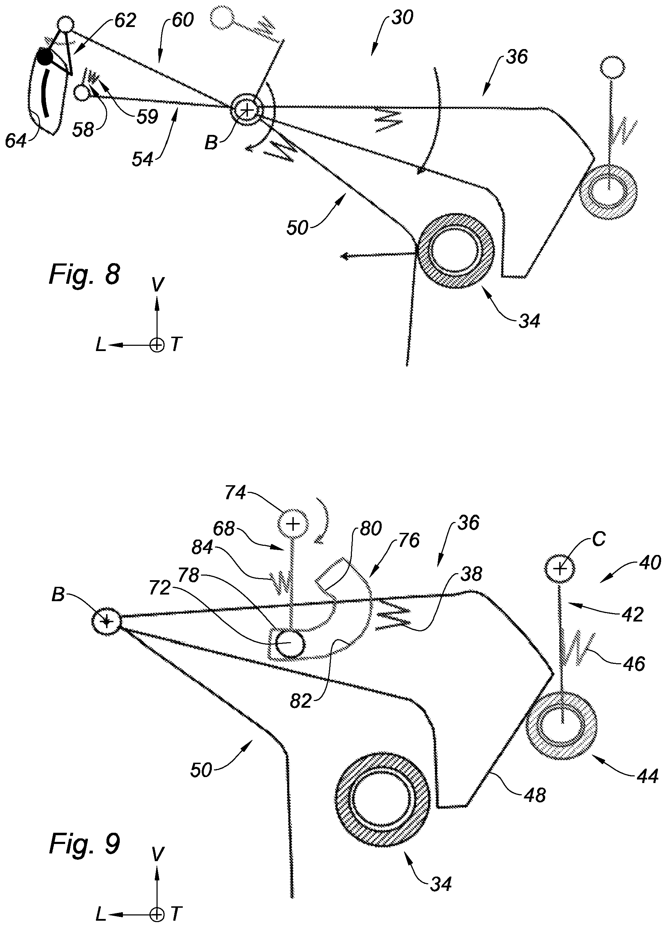

En référence à la figure 8, le doigt 34, ou poussoir, pousse le levier 50 en sur-course, de sorte que la came 62, guidée par le chemin de came 64, atteint sa position de repos, la came 62 libérant le cliquet 58.

En fin de course du crochet 36 et du levier 50, selon la figure 4, la came 62, guidée par le chemin de came 64, retrouve sa position de repos et libère le cliquet 58, le crochet 36 retrouve sa position de verrouillage du capot 20 initiale et le levier 50 retrouve sa position initiale.

Selon un second mode de réalisation de l'invention, représenté aux figures 9 à 11, et décrit ci-dessous, le levier 50 de réarmement est non escamotable.

Plus particulièrement, à la différence du premier dispositif de verrouillage 30 décrit précédemment, le levier 50 du premier dispositif de verrouillage 30 selon le second mode de réalisation est solidaire en pivotement du crochet 36, le levier 50 et le crochet 36 étant montés pivotant sur la structure fixe de l'inverseur 18 autour de l'axe B transversal de pivotement.

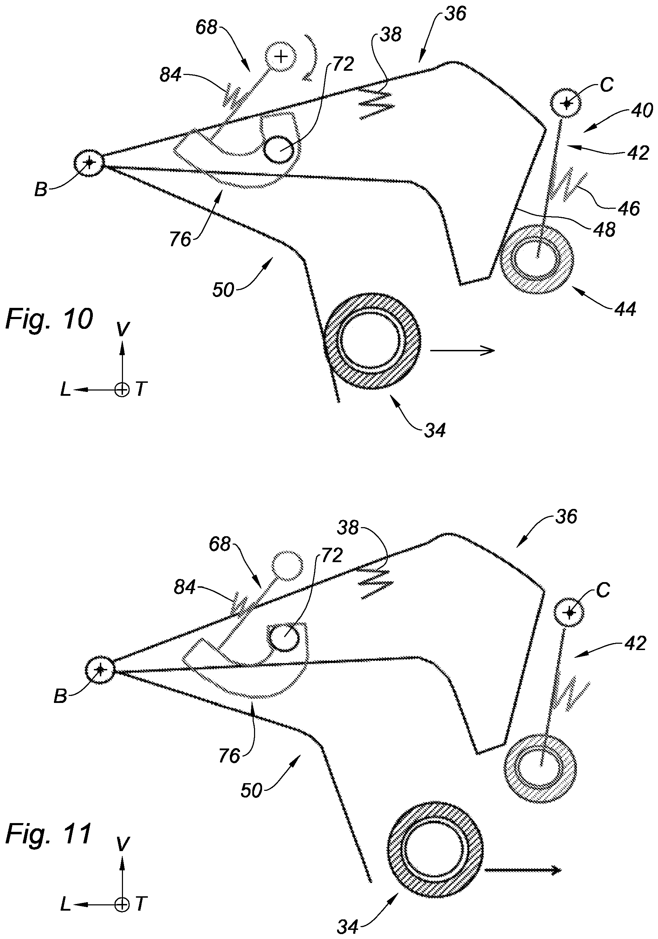

Aussi, l'ensemble formé par le levier 50 et le crochet 36 est rappelé élastiquement vers la position de déverrouillage du crochet 36 illustrée à la figure 10, par le ressort 38 formant dispositif de rappel élastique.

Selon ce second mode de réalisation, le crochet 36 comporte une came 72 transversale qui coopère avec le loquet 68.

Le loquet 68 présente une première extrémité 74 montée pivotante sur la structure fixe de l'inverseur 18, autour d'un axe transversal, et une seconde extrémité formant un chemin de came 76 qui est conçu pour coopérer avec la came 72 du crochet 36.

Le chemin de came 76 présente une première portion de blocage 78 du crochet 36, une deuxième portion de retenue 80, et une troisième portion de guidage 82 intermédiaire.

La portion de blocage 78 du chemin de came 76 est en appui vertical sur la came 72 du crochet 36 pour s'opposer au pivotement du crochet 36, lorsque le loquet 68 occupe un état de blocage.

La portion de guidage 82, coopère avec la came 72 du crochet 36, notamment pour entraîner le crochet 36 en pivotement, lorsque le loquet 68 est entraîné vers son état de déblocage.

Aussi, la portion de retenue 80 du chemin de came 76 est adaptée pour être en appui longitudinal sur la came 72 du crochet 36, lorsque le crochet 36 occupe sa position ouverte de déverrouillage, de sorte que le loquet 68 est maintenu en équilibre dans son état de déblocage représenté à la figure 11.

De plus, le loquet 68 est associé à un actionneur (non représenté) qui permet, par commande, d'entraîner le loquet 68 en pivotement entre un état de blocage du crochet 36 représenté à la figure 9 et un état de déblocage représenté à la figure 11.

Aussi, le loquet 68 est rappelé élastiquement dons son état de blocage du crochet 36, par un ressort 70.

Le mécanisme 40 d'actionnement, identique à celui décrit précédemment pour le premier mode de réalisation de l'invention, comporte un bras 42 d'actionnement qui présente une première extrémité montée pivotante autour d'un axe C transversal sur la structure fixe de l'inverseur 18, et une seconde extrémité équipée d'un galet 44.

De même, le doigt 34 de verrouillage forme un poussoir qui est solidaire en mouvement du capot 20 d'inverseur.

En référence aux figures 9 à 11, le fonctionnement de l'invention selon le second mode de réalisation est décrit ci-dessous de façon chronologique.

Dans un premier temps, en référence à la figure 9, le loquet 68 est entraîné en pivotement dans son état de déblocage du crochet 36, sous l'action de l'actionneur associé (non représenté).

La portion de blocage 78 du chemin de came 76 ne s'oppose plus au crochet 36, de sorte que le crochet 36 est entraîné en pivotement vers sa position de déverrouillage sous l'effet de son ressort 38 de rappel et du chemin de came 76.

Au cours de l'ouverture du crochet 36, en référence à la figure 10, la rampe 48 du crochet 36 libère le galet 44 du bras 42 du mécanisme d'actionnement 40, le bras 42 étant alors entraîné vers sa position de verrouillage par rappel élastique du ressort 46 associé, position dans laquelle le bras 42 actionne le second dispositif de verrouillage 32 pour verrouiller la tuyère 22 sur le capot 20 d'inversion.

Simultanément, toujours au cours de l'ouverture du crochet 36, le crochet 36 est maintenu en position par le doigt 34 poussoir qui coopère encore avec le levier 50.

De même, toujours dans cette position intermédiaire illustrée à la figure 10, le loquet 68 est encore entrainé en pivotement vers son état de déblocage par son actionneur.

Dans un second temps, suite au début du déploiement du capot 20 par l'actionneur 24 associé, le doigt 34 de verrouillage, ou poussoir, est entraîné en déplacement longitudinal par le capot 20, vers l'arrière de la nacelle 10, comme on peut le voir aux figures 10 et 11.

Le retrait du doigt 34 finit de libérer le levier 50 qui est rappelé élastiquement par le ressort 38 associé, vers sa position de réarmement, atteinte à la figure 11.

Lorsque le crochet 36 occupe sa position de déverrouillage, selon la figure 11, le loquet 68 occupe son état de déblocage et la portion de retenue 80 du chemin de came 76 est en appui longitudinal sur la came 72 du crochet 36, de sorte que le loquet 68 est en équilibre dans son état de déblocage, l'actionneur associé au loquet 68 n'est alors plus opérant.

Dans un troisième temps, pour re-verrouiller le crochet 36, le doigt 34 poussoir pousse sur le levier 50 vers l'avant, le levier 50 entraînant le crochet 36 en pivotement vers sa position initiale de verrouillage.

Au cours de la fermeture du crochet 36, le loquet 68 est entraîné jusqu'à sa position de blocage du crochet 36 sous l'effet de son ressort 70 de rappel, afin de bloquer le crochet 36 en pivotement dans sa position de verrouillage du capot 20, illustrée à la figure 9.

De même, au cours de la fermeture du crochet 36, la rampe 48 du crochet 36 pousse le galet 44 à l'encontre du ressort 46 associé, le bras 42 étant alors entraîné vers sa position de déverrouillage dans laquelle le second dispositif de verrouillage 32 déverrouille la tuyère 22.

La présente description de l'invention est donnée à titre d'exemple non limitatif.

## Revendications

1. Inverseur (18) de poussée pour nacelle (10) de turboréacteur d'aéronef comprenant au moins :
- un capot (20) d'inversion de poussée mobile en translation suivant une direction sensiblement parallèle à un axe (A) longitudinal de la nacelle (10), entre une position de jet direct et une position de jet inversé,
- une tuyère (22) de sortie de section variable qui est agencée dans le prolongement aval dudit capot (20) et qui est mobile entre au moins une position de section d'éjection réduite et une position de section d'éjection augmentée,
- un actionneur (24) qui comprend un corps (26) monté sur la structure fixe de l'inverseur (18) et une tige (28) d'actionnement, ladite tige (28) étant adaptée pour entraîner en déplacement la tuyère (22) variable et le capot (20) mobile,
- un premier dispositif de verrouillage (30) du capot (20) dans sa position de jet direct sur la structure fixe de l'inverseur (18), qui comprend un crochet (36) de verrouillage monté pivotant autour d'un axe (B) transversal, entre une position fermée de verrouillage du capot (20) dans laquelle le crochet (36) coopère avec un doigt (34) de verrouillage solidaire du capot (20) d'inversion, et une position ouverte de déverrouillage du capot (20) dans laquelle le crochet (36) libère ledit doigt (34),
- un second dispositif de verrouillage (32) de la tuyère (22) sur le capot d'inversion, adapté pour occuper alternativement une position de verrouillage de la tuyère (22) sur le capot (20) et une position de déverrouillage de la tuyère (22),
- **caractérisé en ce qu'**il comporte un levier (50) de réarmement qui est conçu pour être entraîné en pivotement par le doigt (34), autour d'un axe (B) transversal, depuis une position de repos, jusqu'à une position de réarmement, le levier (50) étant lié en pivotement sur le crochet (36) au moins dans le sens de fermeture du crochet (36), de sorte que l'entraînement en pivotement du levier (50) par le doigt (34) vers sa position de repos entraîne le crochet (36) vers sa position de verrouillage,
- un bras (42) d'actionnement monté mobile sur le capot (20) entre une position de verrouillage de la tuyère (22) dans laquelle ledit bras (42) actionne le second dispositif de verrouillage (32) pour verrouiller la tuyère (22) sur le capot (20) d'inversion, et une position de déverrouillage de la tuyère (22) dans laquelle ledit bras (42) déverrouille la tuyère (22), ledit bras (42) étant entraîné dans sa position de verrouillage par le crochet (36) de verrouillage, au cours du pivotement du crochet (36) vers sa position de déverrouillage.

2. Inverseur (18) de poussée selon la revendication 1, **caractérisé en ce qu'**il comprend un dispositif de rappel élastique (46) du bras (42) vers sa position de verrouillage.

3. Inverseur (18) de poussée selon l'une quelconque des revendications précédentes, **caractérisé en ce qu'**il comprend un dispositif de rappel élastique (61) du levier (50) vers sa position de réarmement.

4. Inverseur (18) de poussée selon l'une quelconque des revendications précédentes, **caractérisé en ce que** le crochet (36) du premier dispositif de verrouillage (30) du capot (20) est monté sur la structure fixe de l'inverseur (18).

5. Inverseur (18) de poussée selon l'une quelconque des revendications précédentes, **caractérisé en ce qu'**il comprend :
- un dispositif de rappel élastique (38) du crochet (36) vers sa position de déverrouillage, et
- un loquet (68) qui est conçu pour être commandé depuis un état de blocage du crochet (36), dans lequel le loquet (68) s'oppose à l'ouverture du crochet (36), vers un état de déblocage du crochet (36) dans lequel le loquet (68) libère le crochet (36), le loquet (68) étant rappelé automatiquement dans son état de blocage du crochet (36) sous l'effet d'un dispositif de rappel élastique (70).

6. Inverseur (18) de poussée selon l'une quelconque des revendications précédentes, **caractérisé en ce que** le levier (50) de réarmement est escamotable, le levier (50) de réarmement et le crochet (36) de verrouillage étant reliés entre eux par un mécanisme du type à cliquet (58) qui est adapté pour accoupler en pivotement le crochet (36) et le levier (50) au cours du réarmement du crochet (36) vers sa position fermée de verrouillage, sous l'action du doigt (34), et ledit mécanisme étant adapté pour désaccoupler en pivotement le crochet (36) et le levier (50) au cours du pivotement du crochet (36) vers sa position de déverrouillage.

7. Inverseur (18) de poussée selon l'une quelconque des revendications 1 à 5, **caractérisé en ce que** le levier (50) de réarmement est solidaire en pivotement du crochet (36), l'ensemble formé par le levier (50) et le crochet (36) étant rappelé élastiquement par un dispositif de rappel élastique (38) vers la position déverrouillée du crochet (36).

8. Inverseur (18) de poussée selon les revendications 5 et 7, **caractérisé en ce que** le loquet (68) de blocage du crochet (36) présente un chemin de came (76) qui est solidaire en mouvement du loquet (68) et qui coopère avec une came (72) fixée sur le crochet (36), le chemin de came (76) présentant une première portion de blocage (78) du crochet (36) dans sa position de verrouillage, une deuxième portion de retenue (80) du crochet (36) dans sa position de déverrouillage, et une troisième portion de guidage (82) intermédiaire du crochet (36) conçue pour permettre le pivotement du crochet (36) lorsque le loquet (68) est commandé dans son état de déblocage.

9. Inverseur (18) de poussée selon la revendication 8, **caractérisé en ce que** la came (72) fixée sur le crochet (36) est adaptée pour coopérer avec le chemin de came (76) pour entraîner le loquet (68) depuis son état de déblocage du crochet (36), vers son état de blocage du crochet (36), au cours de la fermeture du crochet (36) depuis sa position de déverrouillage vers sa position de verrouillage.

10. Nacelle de turboréacteur d'aéronef, **caractérisée en ce qu'**elle comporte un inverseur de poussée conforme à l'une des revendications précédentes.

## Patentansprüche

1. Schubumkehrvorrichtung (18) für eine Gondel (10) eines Turbotriebwerks eines Luftfahrzeugs, mindestens umfassend:
- eine Abdeckung (20) einer Schubumkehr, die in eine im Wesentlichen parallelen Richtung zu einer Längsachse (A) der Gondel (10) zwischen einer Direktstrahlposition und einer Umkehrstrahlposition verschiebbar ist,
- eine Auslassdüse (22) mit variablem Querschnitt, die in der stromabwärtigen Verlängerung der Abdeckung (20) angeordnet ist und die zwischen mindestens einer Position mit verringertem Ausstoßquerschnitt und einer Position mit erhöhtem Ausstoßquerschnitt beweglich ist,
- ein Betätigungsglied (24), das einen Korpus (26), der auf der feststehenden Struktur der Umkehrvorrichtung (18) montiert ist, und eine Betätigungsstange (28) umfasst, wobei die Stange (28) angepasst ist, um die variable Düse (22) und die verschiebbare Abdeckung (20) anzutreiben,
- eine erste Verriegelungsvorrichtung (30) der Abdeckung (20) in ihrer Direktstrahlposition auf der feststehenden Struktur der Umkehrvorrichtung (18), die einen Verriegelungshaken (36) umfasst, der um eine transversale Achse (B) herum schwenkbar zwischen einer geschlossenen Verriegelungsposition der Abdeckung (20), in der der Haken (36) mit einem Verriegelungsfinger (34) zusammenwirkt, der fest mit der Umkehrabdeckung (20) verbunden ist, und einer offenen Verriegelungsposition der Abdeckung (20) montiert ist, in der der Haken (36) den Finger (34) freigibt,
- eine zweite Verriegelungsvorrichtung (32) der Düse (22) auf der Umkehrabdeckung, die angepasst ist, um abwechselnd eine Verriegelungsposition der Düse (22) auf der Abdeckung (20) und eine Entriegelungsposition der Düse (22) einzunehmen,
- **dadurch gekennzeichnet, dass** sie einen Rückstellungshebel (50) aufweist, der gestaltet ist, um vom Finger (34) um eine transversale Achse (B) herum von einer Ruheposition bis zu einer Rückstellungsposition zum Schwenken gebracht zu werden, wobei der Hebel (50) mindestens in die Schließrichtung des Hakens (36) schwenkbar mit dem Haken (36) verbunden ist, sodass der Schwenkantrieb des Hebels (50) durch den Finger (34) in dessen Ruheposition den Haken (36) in dessen Verriegelungsposition antreibt,
- einen Betätigungsarm (42), der zwischen einer Verriegelungsposition der Düse (22), in der der Arm (42) die zweite Verriegelungsvorrichtung (32) betätigt, um die Düse (22) auf der Umkehrabdeckung (20) zu verriegeln, und einer Entriegelungsposition der Düse (22) beweglich auf der Abdeckung (20) montiert ist, in der der Arm (42) die Düse (22) entriegelt, wobei der Arm (42) durch den Verriegelungshaken (36), beim Schwenken des Hakens (36) in seine Entriegelungsposition, in seine Verriegelungsposition angetrieben wird.

2. Schubumkehrvorrichtung (18) nach Anspruch 1, **dadurch gekennzeichnet, dass** sie eine elastische Rückführungsvorrichtung (46) des Arms (42) in dessen Verriegelungsposition umfasst.

3. Schubumkehrvorrichtung (18) nach einem der vorstehenden Ansprüche, **dadurch gekennzeichnet, dass** sie eine elastische Rückführungsvorrichtung (61) des Hebels (50) in dessen Rückstellungsposition umfasst.

4. Schubumkehrvorrichtung (18) nach einem der vorstehenden Ansprüche, **dadurch gekennzeichnet, dass** der Haken (36) der ersten Verriegelungsvorrichtung (30) der Abdeckung (20) auf der feststehenden Struktur der Umkehrvorrichtung (18) montiert ist.

5. Schubumkehrvorrichtung (18) nach einem der vorstehenden Ansprüche, **dadurch gekennzeichnet, dass** sie umfasst:
- eine elastische Rückführungsvorrichtung (38) des Hakens (36) in seine Entriegelungsposition, und
- einen Riegel (68), der gestaltet ist, um von einem Blockierzustand des Hakens (36), in dem sich der Riegel (68) der Öffnung des Hakens (36) widersetzt, in einen Freigabezustand des Hakens (36) gesteuert zu werden, in dem der Riegel (68) den Haken (36) freigibt, wobei der Riegel (68) unter der Wirkung einer elastischen Rückführungsvorrichtung (70) automatisch in seinen Blockierzustand des Hakens (36) rückgeführt wird.

6. Schubumkehrvorrichtung (18) nach einem der vorstehenden Ansprüche, **dadurch gekennzeichnet, dass** der Rückstellungshebel (50) einziehbar ist, wobei der Rückstellungshebel (50) und der Verriegelungshaken (36) durch einen Mechanismus in der Art einer Sperrklinke (58) miteinander verbunden sind, die angepasst ist, um den Haken (36) und den Hebel (50) bei der Rückstellung des Hakens (36) in dessen geschlossene Verriegelungsposition unter der Betätigung des Fingers (34) zu koppeln, und der Mechanismus angepasst ist, um den Haken (36) und den Hebel (50) beim Schwenken des Hakens (36) in seine Entriegelungsposition schwenkbar zu lösen.

7. Schubumkehrvorrichtung (18) nach einem der Ansprüche 1 bis 5, **dadurch gekennzeichnet, dass** der Rückstellungshebel (50) schwenkfest mit dem Haken (36) verbunden ist, wobei die durch den Hebel (50) und den Haken (36) gebildete Einheit elastisch durch eine elastische Rückführungsvorrichtung (38) in die entriegelte Position des Hakens (36) rückgeführt wird.

8. Schubumkehrvorrichtung (18) nach den Ansprüchen 5 und 7, **dadurch gekennzeichnet, dass** der Blockierriegel (68) des Hakens (36) eine Nockenbahn (76) aufweist, die bewegungsfest mit dem Riegel (68) verbunden ist und die mit einem Nocken (72) zusammenwirkt, der auf dem Haken (36) fixiert ist, wobei die eine Nockenbahn (76) einen ersten Blockierabschnitt (78) des Hakens (36) in dessen Verriegelungsposition, einen zweiten Rückhalteabschnitt (80) des Hakens (36) in dessen Entriegelungsposition, und einen dritten Zwischenführungsabschnitt (82) des Hakens (36) aufweist, der gestaltet ist, um den Schwenk des Hakens (36) zu erlauben, wenn der Riegel (68) in seinen Freigabezustand gesteuert wird.

9. Schubumkehrvorrichtung (18) nach Anspruch 8, **dadurch gekennzeichnet, dass** der auf dem Haken (36) fixierte Nocken (72) angepasst ist, um mit der Nockenbahn (76) zusammenzuwirken, um den Riegel (68), beim Schließen des Hakens (36) von dessen Entriegelungsposition in dessen Verriegelungsposition, von seinem Freigabezustand des Hakens (36) in seinen Blockierzustand des Hakens (36) anzutreiben.

10. Gondel eines Turbotriebwerks eines Luftfahrzeugs, **dadurch gekennzeichnet, dass** sie eine Schubumkehrvorrichtung nach einem der vorstehenden Ansprüche aufweist.

## Claims

1. A thrust reverser (18) for a nacelle (10) of an aircraft turbojet engine comprising at least:
- a thrust reverser cowl (20) movable in translation along a direction substantially parallel to a longitudinal axis (A) of the nacelle (10), between a direct jet position and a reversed jet position,
- an outlet nozzle (22) of a variable section which is arranged in the downstream extension of said cowl (20) and which is movable between at least one reduced ejection section position and one increased ejection section position,
- an actuator (24) which comprises a body (26) mounted on the fixed structure of the thrust reverser (18) and an actuating rod (28), said rod (28) being adapted to drive in displacement the variable nozzle (22) and the movable cowl (20),
- a first device (30) for locking the cowl (20) in its direct jet position on the fixed structure of the thrust reverser (18), which comprises a locking hook (36) pivotally mounted about a transverse axis (B), between a closed locking position of the cowl (20) in which the hook (36) cooperates with a locking finger (34) secured to the thrust reverser cowl (20), and an open locking position of the cowl (20) in which the hook (36) releases said finger (34),
- a second device (32) for locking the nozzle (22) on the thrust reverser cowl, adapted to occupy alternately a locking position of the nozzle (22) on the cowl (20) and an unlocking position of the nozzle (22),
- **characterized in that** it includes a reset lever (50) which is designed to be pivotally driven by the finger (34), about a transverse axis (B), from a rest position to a reset position, the lever (50) being pivotally linked on the hook (36) at least in the direction of closure of the hook (36), so that the pivotal driving of the lever (50) by the finger (34) toward its rest position drives the hook (36) toward its locking position,
- an actuating arm (42) movably mounted on the cowl (20) between a locking position of the nozzle (22) in which said arm (42) actuates the second locking device (32) to lock the nozzle (22) on the thrust reverser cowl (20), and an unlocking position of the nozzle (22) in which said arm (42) unlocks the nozzle (22), said arm (42) being driven in its locking position by the locking hook (36), during the pivoting of the hook (36) toward its unlocking position.

2. The thrust reverser (18) according to claim 1, **characterized in that** it comprises an elastic return device (46) of the arm (42) toward it locking position.

3. The thrust reverser (18) according to any one of the preceding claims, **characterized in that** it comprises an elastic return device (61) of the lever (50) toward its reset position.

4. The thrust reverser (18) according to any one of the preceding claims, **characterized in that** the hook (36) of the first locking device (30) of the cowl (20) is mounted on the fixed structure of the thrust reverser (18).

5. The thrust reverser (18) according to any one of the preceding claims, **characterized in that** it comprises:
- an elastic return device (38) of the hook (36) toward it unlocking position, and
- a latch (68) which is designed to be controlled from a blocking state of the hook (36), in which the latch (68) opposes the opening of the hook (36), toward an unblocking state of the hook (36) in which the latch (68) releases the hook (36), the latch (68) being automatically returned to its blocking state of the hook (36) under the effect of an elastic return device (70).

6. The thrust reverser (18) according to any one of the preceding claims, **characterized in that** the reset lever (50) is retractable, the reset lever (50) and the locking hook (36) being linked together by a ratchet-type mechanism (58) which is adapted to pivotally couple the hook (36) and the lever (50) when resetting the hook (36) toward its closed locking position, under the action of the finger (34), said mechanism being adapted to pivotally disengage the hook (36) and the lever (50) during the pivoting of the hook (36) toward its unlocking position.

7. The thrust reverser (18) according to any one of claims 1 to 5, **characterized in that** the reset lever (50) is pivotally secured to the hook (36), the set formed by the lever (50) and the hook (36) being elastically returned by an elastic return device (38) toward the unlocking position of the hook (36).

8. The thrust reverser (18) according to claims 5 and 7, **characterized in that** the latch (68) for blocking the hook (36) has a cam path (76) which is secured in movement to the latch (68) and which cooperates with a cam (72) fixed on the hook (36), the cam path (76) having a first portion (78) for blocking the hook (36) in its locking position, a second portion (80) for retaining the hook (36) in its unlocking position, and a third intermediate portion (82) for guiding the hook (36) designed to allow the pivoting of the hook (36) when the latch (68) is controlled in its unblocking state.

9. The thrust reverser (18) according to claim 8, **characterized in that** the cam (72) fixed on the hook (36) is adapted to cooperate with the cam path (76) in order to drive the lock (68) from its state of unblocking the hook (36) to its state of blocking the hook (36), when closing the hook (36) from its unlocking position to its locking position.

10. An aircraft turbojet engine nacelle, **characterized in that** it includes a thrust reverser in accordance with any of the preceding claims.
